# EUROPEAN PATENT SPECIFICATION

(11) **EP 3 671 991 B1**
(45) Date of publication and mention of the grant of the patent: **23.04.2025**
(21) Application number: 18214214.1
(22) Date of filing: 19.12.2018
(51) Int. Cl.: H02B 13/02

(54) **THREE-PHASE SWITCHGEAR**
DREIPHASIGE SCHALTANLAGE
APPAREILLAGE DE COMMUTATION TRIPHASÉ

(43) Date of publication of application: 24.06.2020
(73) Proprietor: ABB Schweiz AG, 5400 Baden (CH)
(72) Inventor: Kozel, Tomas, 635 00 Brno (CZ); Javora, Radek, 664 62 Hrusovany u Brna (CZ); Cernohous, Josef, 561 65 Jamne nad Orlici (CZ); Vrbka, Pavel, 592 62 Nedvedice (CZ); Budde, Christoph, 69123 Heidelberg (DE); Simonidis, Christian, 76187 Karlsruhe (DE); Breisch, Sebastian, 69239 Neckarsteinach (DE); Staab, Harald, 69151 Neckargemünd (DE)
(74) Representative: Maiwald GmbH

(56) References cited:
- EP-A1- 2 953 219
- CN-A- 103 996 990
- CN-A- 104 577 747
- CN-A- 105 071 280
- CN-U- 206 595 617
- DE-A1- 4 103 101

## Description

### FIELD OF THE INVENTION

The present invention relates to a three phase switchgear for low voltage, medium voltage or high voltage use within a substation.

### BACKGROUND OF THE INVENTION

In state-of-art switchgear and control gear (also called controlgear) designs the primary (main) circuits and auxiliary circuit are arranged in a manner that is not convenient for monitoring or maintenance.

US 2017/0085064 A1 describes a local equipment room (LER) for use in an industrial facility, having one or more robots to perform certain tasks, and the LER being filled with non-atmospheric fluid or gas.

DE4103101A1 describes that the drive shaft is provided for operating at least one knife switch. The earth connection is fixed on or at an insulating part, also the support part, the fixed contact and the bearing for the drive shaft, and that the insulating part can be made of synthetic resin. Of the support part, the fixed contact, the bearing and the earth connection, at least two are arranged at the insulating support part. The support part, the fixed contact and the earthing connection are cast integral at the moulded insualting support part.

CN104577747A relates to a switch cabinet integrated to a modular smart power grid.

The switch cabinet comprises a cabinet body which consists of an upper cabinet body and a lower cabinet body as well as a relay instrument room, an isolating switch operating mechanism, a circuit breaker operating mechanism and a lower cabinet door which are sequentially arranged at the front end of the cabinet body from bottom to top, wherein two opposite side plates are arranged on two sides of the lower cabinet body; an edgefold which is bent towards the interior of the cabinet body is arranged at the upper end of each of the side plates; edgefold mounting holes are formed in each of the edgefolds; an insulating mounting frame is fixedly mounted on the edgefolds, the insulating mounting frame consists of a front end plate, a rear end plate, an inlet wire insulating supporting piece, a left side plate and a right side plate; an isolating switch and a circuit breaker are mounted on the insulating mounting frame; a current transformer and a lightning arrester are further sequentially arranged from top to bottom below the circuit breaker in the lower cabinet body.

EP2953219A1 describes that a pressure tank in which a circuit breaker and a disconnector are received and an insulating gas is sealed, a circuit breaker operating mechanism that is installed outside the pressure tank and operates the circuit breaker, and a disconnector operating mechanism that is installed outside the pressure tank and operates the disconnector form an integrated structure and are received in a housing. The integrated structure is rotated and positioned in accordance with positions of bus-connecting portions for buses, which are connected to the pressure tank, and a position of an external cable-connecting portion for an external cable.

CN103996990A describes an inflatable switch cabinet which comprises a cabinet body. A gas tank is arranged on the rear side of the cabinet body, a control chamber is arranged on the upper portion of the front side of the cabinet body, a cable chamber is arranged on the lower portion of the front side of the cabinet body, a vacuum breaker is arranged on the upper portion of the gas tank, an isolating switch is arranged in the middle of the gas tank, a main loop is arranged on the lower portion of the gas tank, and an isolating switch operating mechanism and a vacuum breaker operating mechanism are arranged in the control chamber. The isolating switch operating mechanism achieves switch-on, switch-off and ground connection of a disconnecting link by operating a first operating shaft and a second operating shaft, and power-driven operation can be achieved. The vacuum breaker comprises an insulation support, a vacuum bubble and an operating main shaft, the vacuum bubble is arranged in the insulation support in the mode with an upward dynamic contact, a conductive contact and a conductive piece are fixedly arranged on the lower portion of the insulation support and are fixedly connected with a static contact at the lower end of the vacuum bubble, the conductive contact and the disconnecting link are matched for switch-on, and the operating main shaft drives the dynamic contact at the upper end of the vacuum bubble to vertically move to achieve switch-on and switch-off of the vacuum breaker. It is described that the inflatable switch cabinet is compact in structure, reliable in motion, safe in use and convenient to maintain.

CN206595617U describes a gas insulated switch device, including the cabinet body, internal portion is equipped with low -pressure chamber, switch gear room, operation mechanism chamber, cable chamber and pressure release room at the cabinet, switch gear room and cabinet body fixed connection, and operation mechanism chamber sets up between switch gear room and cabinet door, and the low -pressure chamber setting is in the operation mechanism chamber top, and the cable chamber setting is in the operation mechanism chamber below, and the pressure release room sets up in the switch gear room below, the switch gear room includes inclosed gas tank, expands generating line, vacuum circuit breaker and isolator from last to being equipped with the side down in proper order in that the gas tank is inside, is equipped with the connection bar copper at the lower extreme of gas tank, and the other end of connection bar copper is connected with the cable chamber for electric wire between protective bonding switch gear room and the cable chamber, be equipped with vacuum circuit breaker operating device and isolating switch operating device under to in proper order on the operation mechanism chamber follow. The utility model provides a gas insulated switch device is that modularized design, simple structure are reasonable, with low costs, small, operation safe and reliable.

CN105071280A describes a vacuum switch ring main unit suitable for being insulated by an environment-friendly gas. The vacuum switch ring main unit suitable comprises a ring main unit body, wherein the ring main unit body is divided into an operating chamber, a vacuum switch chamber, a cable chamber and a gas discharge chamber; the vacuum switch chamber is internally provided with a plurality of vacuum circuit breakers, isolating switches, conductive rods, and a first transmission shaft and a third transmission shaft which are vertical to the vacuum circuit breakers; the plurality of isolating switches are fixedly connected through the third transmission shaft, and the isolating switches are connected with the conductive rods respectively; a cam mechanism is fixed to each end of the first transmission shaft, and the cam mechanisms are in contact with a second transmission shaft and drive the second transmission shaft to move up and down; the operating chamber is integrally provided with a first operating mechanism which is used for controlling the first transmission shaft to rotate, and a second operating mechanism which is used for controlling the third transmission shaft to rotate; and a first rotating shaft drives a pressing rod to move up and down through the cam mechanism when the first rotating shaft is driven to rotate by the first operating mechanism. The vacuum switch ring main unit has the advantage of being simple in structure, safe, and convenient in switching on and switching off.

Such robotic systems operate with the substation or switchgear or control gear and perform both monitoring and maintenance tasks. Such robotic systems can be quite complex and expensive, especially when considering variability existing in substations today. Even though robotic systems can reduce maintenance tasks in a substation with respect to switchgear or control gear, the robot itself may require considerable maintenance. This can require the robot to be removed from the substation, switchgear or control gear or the personnel entering the substation, switchgear or control gear and thus leads to substation shut down.

There is a need to address this issue.

### SUMMARY OF THE INVENTION

Therefore, it would be advantageous to have a better design of a switchgear.

The object of the present invention is solved with the subject matter of the independent claim, wherein further embodiments are incorporated in the dependent claims.

In an aspect, there is provided a switchgear as defined in appended claim 1. The invention and its scope of protection is defined by Claim 1. Embodiments of the invention are defined in the appended dependent claims.

### BRIEF DESCRIPTION OF THE DRAWINGS

Exemplary embodiments will be described in the following with reference to the following drawings:
Fig. 1 shows an example of a switchgear according to the invention; and
Fig. 2 shows an example of a switchgear not according to the invention.

### DETAILED DESCRIPTION OF EMBODIMENTS

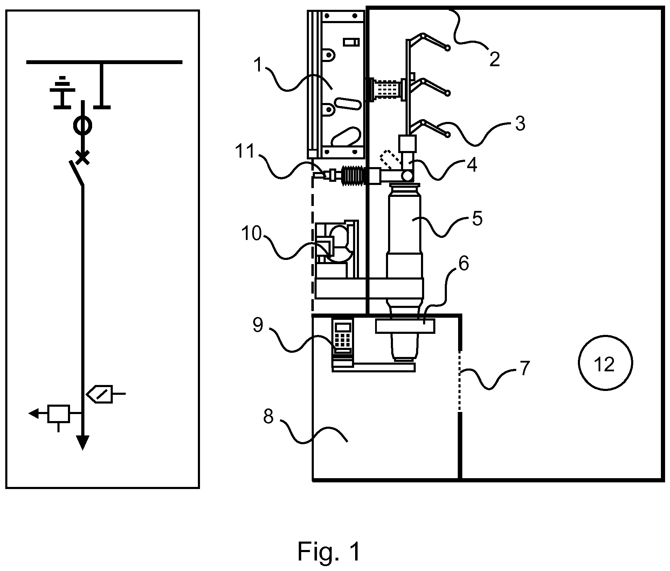

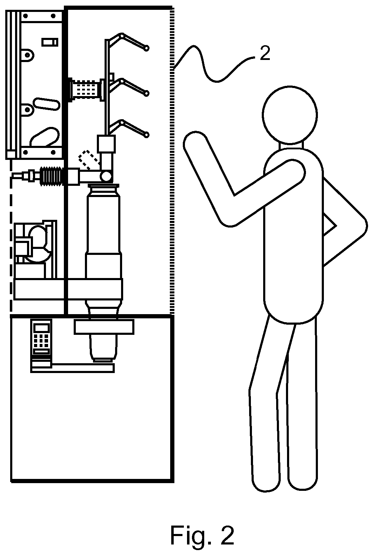

Figs. 1-2 show examples of a switchgear for operation in a low voltage, medium voltage or high voltage substation. In Fig. 2 a human operator is shown to the right of the switchgear, but they could equally be on the left gaining access to the components accessible from that side of the switchgear or control panel. It is to be noted that the example shown in Fig. 1 relates to the claimed switchgear.

One example relates to a switchgear, comprising at least one first compartment 2, 8, 12, a second compartment 1, a plurality of main switchgear components, and a plurality of auxiliary switchgear components. The plurality of main switchgear components comprises a main busbar system 3, a three position linear or rotational movement disconnector 4, a circuit breaker 5, and a cable connection. The plurality of auxiliary switchgear components comprises a disconnector drive 11 and a circuit breaker drive 10. The plurality of main switchgear components are housed in the at least one first compartment. The plurality of auxiliary switchgear are housed in the second compartment. The circuit breaker and three position linear or rotational movement disconnector are mounted vertically one above the other in the at least one first compartment.

It is to be noted that the description associated with Figs. 1-2, could relate to one phase of a three phase system, and the components for the other two phases could similarly be housed in the at least one first compartment and the second compartment. Thus again auxiliary components for all three phases can be in the second compartment, and the main or primary components for all three phases be located in the at least one first compartment, but with the circuit breaker and disconnector for each mounted vertically. Thus, the description below can also relate to a three phase system, where the description as it relates to one phase could apply to all three phases. It is also to be noted, that for such a three phase system, segregating walls can be provided between components relating to the different phases.

The circuit breaker and three position or rotational movement disconnector are mounted vertically one above the other in the at least one first compartment.

According to an example, when the plurality of main switchgear components are de-energized the at least one first compartment is configured to enable an operator to access an interior of the at least one first compartment.

The disconnector drive 11 and the circuit breaker drive 10 are mounted vertically one above the other in the second compartment.

The at least one first compartment comprises two compartments 8, 12. A first compartment 8 of the at least one first compartment is a cable connection compartment within which is housed a cable connection. A second compartment 12 of the at least one first compartment houses the circuit breaker and the three position linear or rotational movement disconnector.

According to an example, a voltage sensor 9 and a current sensor 6 are housed in the cable connection compartment.

According to an example, at least one sensor is located in the cable connection compartment 8, and the at least one sensor is configured to monitor the components in the cable connection compartment.

According to an example, at least one sensor is located in the second compartment 12 of the at least one first compartment, and the at least one sensor is configured to monitor the components in the second compartment of the at least one first compartment.

According to an example, the second compartment is open-sided on at least one side.

The at least one first compartment comprises at least one door or removable wall section.

A door or removable wall section 7 is located in a wall segregating the cable connection compartment 8 from the second compartment 12 of the at least one first compartment.

The switchgear is configured such that the door or removable wall section 7 must be in position to provide an arc proof segregation between the cable connection compartment and the second compartment of the at least one first compartment for a user to be able to at least partially enter the cable connection compartment when the components in the second compartment of the at least one first compartment are energized.

The door is configured to operate automatically.

The cable connection compartment has at least one door or removal wall section in an exterior wall.

According to an example, the second compartment 12 of the at least one first compartment has at least one door or removal wall section in an exterior wall.

According to an example, the second compartment of the at least one first compartment is sized such that a user can gain access to the interior of the second compartment of the at least one first compartment without being able to completely enter the second compartment of the at least one first compartment.

According to an example, at least one sensor is located in the second compartment 1, and the at least one sensor is configured to monitor the components in the second compartment.

According to an example, one or more of the plurality of auxiliary switchgear or control components are housed in a removable module within the second compartment.

Thus, a new substation development is provided, where switchgear has been designed allowing for a much simpler automation system to be designed for monitoring and maintenance tasks on the unmanned switchgear.

To put this another way, components and switching devices on the primary circuit are arranged vertically, and could be one above the other, to facilitate better access to them for monitoring and maintenance, and can be arranged vertically, and in one plane if required. The auxiliaries of the switching devices can also be arranged vertically, and again one above the other as well, in one vertical plane if required. The auxiliaries are separated from the primary circuits by an arc proof wall to allow for human personnel access whilst the switchgear is in operation. To prevent unauthorized access to the auxiliaries, a removable cover is provided in front of the switching devices auxiliaries. This facilitates maintenance of auxiliaries, via automation systems or humans, that may require more frequent maintenance than other components within the switchgear.

Continuing with the figures, specific features are now described.

Fig. 1 shows a detailed example of a switchgear, where for ease of reference the following features shown are listed:
1. Low-voltage compartment with auxiliary circuits;
2. Arc proof enclosure;
3. Main busbars, in three-phase arrangement;
4. Three position disconnector switch (connected/disconnected/earthed position);
5. Circuit breaker;
6. Current sensor;
7. Segregation cover - open when the feeder is in operation, closed automatically when the external front cover to the cable connection box is open for human access. The segregation cover forms an arc proof segregation along with the cable connection box wall between the cable connection box and the main compartment for main circuits, when the segregation cover is in the closed position;
8. Cable connection box, accessible for operators by removing/opening a cover or door, that forms part of the arc proof enclosure when the cover/door is in position or closed;
9. Voltage sensor;
10. Circuit breaker drive and auxiliaries, accessible for operators by removing a cover or opening a door to the low-voltage compartment;
11. Disconnector switch drive and auxiliaries, accessible for operators by removing the cover or opening the door to the low-voltage compartment;
12. Main compartment providing a main circuit space, including space for an automation system.

As shown in fig. 1 the primary circuits and devices are located in one common busbar and circuit breaker compartment 12, that can be opened and need not be segregated feeder by feeder with side walls, but can be segregated feeder by feeder with side walls. Any arc fault situation is preferably mitigated by active arc fault protection, and the arc duration limited to a level that does not allow the arc to burn uncontrollably. The cable compartment 8 of each feeder is in normal operation opened to the common busbar and circuit breaker compartment 12, while an automatically operated arc proof segregation is inserted to segregate the cable connection compartment from the rest of the switchgear in case a human operator needs to access to cable connections of a particular feeder. The cable compartments are segregated between feeders with side walls, but this is not essential.

For unmanned operation, the main busbar and circuit breaker space 12 is provided with an automation system that moves along the feeder line and monitors and/or maintains the switching devices, insulation, and joints on the primary circuit.

As shown in Fig. 1 the low-voltage compartment 1 can have at least one open side, but can be enclosed with walls that are removable. The auxiliaries of the switching devices are modularised in order to simplify maintenance tasks on the auxiliaries, through extracting a removable module from the low-voltage compartment housing the auxiliaries. Then either carrying out maintenance or repair on the auxiliaries and reinserting the same module, or immediately replacing the module with a module housing the same auxiliaries and then later carrying out maintenance or repair on the auxiliaries in the module that was first extracted.

In Fig. 1 a door or removable cover separates the cable connection compartment 8 from the main circuit compartment 12. One or more fixed sensors can be installed in each compartment for monitoring, however such monitoring and maintenance tasks can be carried out by human operators.

As shown in Fig. 2, the switchgear can have a design where the depth of the common main busbar and circuit breaker compartment 12 has been shrunk to a minimum, while still enabling the human operator to access the interior via a removable cover or door.

It is to be noted that a circuit breaker pole design of the switchgear can have primary connections on the pole side, instead of the pole having top and bottom primary connections. The primary connections on such a pole can then face the main compartment space 12, thereby facilitating access by an automation system.

In Fig.1 a rotational three position disconnector switch is shown, but a disconnector switch with linear movement can be used instead.

The primary circuit can include other components and devices not described in Fig.1, such as earthing switch, voltage indication, surge arrestors, Ultra Fast Earthing Switch (UFES), IS-limiters (as invented by ABB Calor Emag in 1955), contactors, load-break switches, fuses.

## Claims

1. A switchgear, comprising:
- at least one first compartment (2, 8, 12);
- a second compartment (1);
- a plurality of main switchgear components; and
- a plurality of auxiliary switchgear components;
wherein the at least one first compartment comprises at least one door or removable wall section;
wherein the at least one first compartment is configured to be arc proof;
wherein the plurality of main switchgear components comprises a main busbar system (3), a three position linear or rotational movement disconnector (4), a circuit breaker (5), and a cable connection;
wherein, the plurality of auxiliary switchgear components comprises a disconnector drive (11) and a circuit breaker drive (10);
wherein, the plurality of main switchgear components are housed in the at least one first compartment;
wherein, the plurality of auxiliary switchgear are housed in the second compartment;
wherein, the circuit breaker and the three position linear or rotational movement disconnector are mounted vertically one above the other in the at least one first compartment;
wherein the disconnector drive (11) and the circuit breaker drive (10) are mounted vertically one above the other in the second compartment;
wherein the at least one first compartment comprises two compartments (8, 12), wherein a first compartment (8) of the at least one first compartment is a cable connection compartment within which is housed a cable connection; and wherein a second compartment (12) of the at least one first compartment houses the circuit breaker and the three position linear or rotational movement disconnector;
wherein a door (7) is located in a wall segregating the cable connection compartment (8) from the second compartment (12) of the at least one first compartment;
wherein the cable connection compartment (8) has a door or removable wall section in an exterior wall;
wherein the door (7) located in the wall segregating the cable connection compartment (8) from the second compartment (12) of the at least one first compartment is configured to be open when a feeder is in operation and the door or removable wall section in the exterior wall of the cable connection compartment is closed and the door (7) located in the wall segregating the cable connection compartment (8) from the second compartment (12) of the at least one first compartment is configured to close automatically when the door or removable wall section in the exterior wall of the cable connection compartment is open for human access, so that the door (7) located in the wall segregating the cable connection compartment (8) from the second compartment (12) of the at least one first compartment forms an arc proof segregation along with the cable connection wall between the cable connection compartment (8) and the second compartment (12) of the at least one compartment when it is in the closed position, thereby allowing a user to be able to at least partially enter the cable connection compartment when the components in the second compartment (12) of the at least one first compartment are energized.

2. Switchgear according to claim 1, wherein, when the plurality of main switchgear components are de-energized the at least one first compartment is configured to enable an operator to access an interior of the at least one first compartment.

3. Switchgear according to any of claims 1-2, wherein a voltage sensor (9) and a current sensor (6) are housed in the cable connection compartment.

4. Switchgear according to any of claims 1-3, wherein at least one sensor is located in the cable connection compartment (8), and wherein the at least one sensor is configured to monitor the components in the cable connection compartment.

5. Switchgear according to any of claims 1-4, wherein at least one sensor is located in the second compartment (12) of the at least one first compartment, and wherein the at least one sensor is configured to monitor the components in the second compartment of the at least one first compartment.

6. Switchgear according to any of claims 1-5, wherein the second compartment is open-sided on at least one side.

7. Switchgear according to any of claims 1-6, wherein the second compartment of the at least one first compartment is sized such that a user can gain access to the interior of the second compartment of the at least one first compartment without being able to completely enter the second compartment of the at least one first compartment.

8. Switchgear according to any of claims 1-7, wherein at least one sensor is located in the second compartment (1), and wherein the at least one sensor is configured to monitor the components in the second compartment.

9. Switchgear according to any of claims 1-8, wherein one or more of the plurality of auxiliary switchgear are housed in a removable module within the second compartment.

## Patentansprüche

1. Eine Schaltanlage, umfassend:
- mindestens ein erstes Fach (2, 8, 12);
- ein zweites Fach (1);
- eine Vielzahl von Hauptschaltanlagenkomponenten; und
- eine Vielzahl von Hilfsschaltanlagenkomponenten;
wobei das mindestens eine erste Fach mindestens eine Tür oder eine entfernbare Wandsektion umfasst,
wobei das mindestens eine erste Fach lichtbogenfest ausgeführt ist,
wobei die Vielzahl der Hauptschaltanlagenkomponenten ein Hauptsammelschienensystem (3), einen dreistufigen linearen oder rotierenden Trennschalter (4), einen Leistungsschalter (5) und eine Kabelverbindung umfasst,
wobei die Vielzahl der Hilfsschaltanlagenkomponenten einen Trennschalterantrieb (11) und einen Leistungsschalterantrieb (10) umfasst,
wobei die Vielzahl der Hauptschaltanlagenkomponenten im mindestens einen ersten Fach untergebracht ist,
wobei die Vielzahl der Hilfsschaltanlagenkomponenten im zweiten Fach untergebracht ist,
wobei der Leistungsschalter und der dreistufige lineare oder rotierende Trennschalter vertikal übereinander im mindestens einen ersten Fach montiert sind,
wobei der Trennschalterantrieb (11) und der Leistungsschalterantrieb (10) vertikal übereinander im zweiten Fach montiert sind,
wobei das mindestens eine erste Fach zwei Fächer (8, 12) umfasst, wobei ein erstes Fach (8) des mindestens einen ersten Fachs ein Kabelanschlussfach ist, in dem eine Kabelverbindung untergebracht ist, und wobei ein zweites Fach (12) des mindestens einen ersten Fachs den Leistungsschalter und den dreistufigen linearen oder rotierenden Trennschalter beherbergt,
wobei eine Tür (7) in einer Wand angeordnet ist, die das Kabelanschlussfach (8) von dem zweiten Fach (12) des mindestens einen ersten Fachs trennt,
wobei das Kabelanschlussfach (8) eine Tür oder eine entfernbare Wandsektion in einer Außenwand aufweist,
wobei die Tür (7), die sich in der Wand befindet, die das Kabelanschlussfach (8) von dem zweiten Fach (12) des mindestens einen ersten Fachs trennt, so konfiguriert ist, dass sie geöffnet ist, wenn eine Einspeisung in Betrieb ist, und die Tür oder entfernbare Wandsektion in der Außenwand des Kabelanschlussfachs geschlossen ist,
und wobei die Tür (7), die sich in der Wand befindet, die das Kabelanschlussfach (8) von dem zweiten Fach (12) des mindestens einen ersten Fachs trennt, so konfiguriert ist, dass sie sich automatisch schließt, wenn die Tür oder entfernbare Wandsektion in der Außenwand des Kabelanschlussfachs für den Zugang durch Personen geöffnet wird, sodass die Tür (7), die sich in der Wand befindet, die das Kabelanschlussfach (8) von dem zweiten Fach (12) des mindestens einen ersten Fachs trennt, zusammen mit der Wand des Kabelanschlussfachs eine lichtbogenfeste Trennung zwischen dem Kabelanschlussfach (8) und dem zweiten Fach (12) des mindestens einen ersten Fachs bildet, wenn sie sich in der geschlossenen Position befindet, wodurch es einem Benutzer ermöglicht wird, das Kabelanschlussfach zumindest teilweise zu betreten, während die Komponenten im zweiten Fach (12) des mindestens einen ersten Fachs unter Spannung stehen.

2. Schaltanlage nach Anspruch 1, wobei, wenn die Vielzahl der Hauptschaltanlagenkomponenten spannungslos ist, das mindestens eine erste Fach so konfiguriert ist, dass es einem Bediener den Zugang zum Innenraum des mindestens einen ersten Fachs ermöglicht.

3. Schaltanlage nach einem der Ansprüche 1-2, wobei ein Spannungssensor (9) und ein Stromsensor (6) im Kabelanschlussfach untergebracht sind.

4. Schaltanlage nach einem der Ansprüche 1-3, wobei mindestens ein Sensor im Kabelanschlussfach (8) angeordnet ist und wobei der mindestens eine Sensor eingerichtet ist, die Komponenten im Kabelanschlussfach zu überwachen.

5. Schaltanlage nach einem der Ansprüche 1-4, wobei mindestens ein Sensor im zweiten Fach (12) des mindestens einen ersten Fachs angeordnet ist und wobei der mindestens eine Sensor eingerichtet ist, die Komponenten im zweiten Fach des mindestens einen ersten Fachs zu überwachen.

6. Schaltanlage nach einem der Ansprüche 1-5, wobei das zweite Fach auf mindestens einer Seite offen ist.

7. Schaltanlage nach einem der Ansprüche 1-6, wobei das zweite Fach des mindestens einen ersten Fachs so dimensioniert ist, dass ein Benutzer Zugang zum Innenraum des zweiten Fachs des mindestens einen ersten Fachs erhalten kann, ohne das zweite Fach des mindestens einen ersten Fachs vollständig betreten zu können.

8. Schaltanlage nach einem der Ansprüche 1-7, wobei mindestens ein Sensor im zweiten Fach (1) angeordnet ist und wobei der mindestens eine Sensor eingerichtet ist, die Komponenten im zweiten Fach zu überwachen.

9. Schaltanlage nach einem der Ansprüche 1-8, wobei eine oder mehrere der Vielzahl der Hilfsschaltanlagenkomponenten in einem herausnehmbaren Modul innerhalb des zweiten Fachs untergebracht sind.

## Revendications

1. Appareillage de commutation, comprenant :
- au moins un premier compartiment (2, 8, 12) ;
- un second compartiment (1) ;
- une pluralité de composants principaux d'appareillage de commutation ; et
- une pluralité de composants auxiliaires d'appareillage de commutation ;
l'au moins un premier compartiment comprenant au moins une porte ou une section de paroi amovible ;
l'au moins un premier compartiment étant configuré pour être à l'épreuve des arcs électriques ;
la pluralité de composants principaux d'appareillage de commutation comprenant un système principal de barres omnibus (3), un sectionneur à mouvement linéaire ou rotatif à trois positions (4), un disjoncteur (5) et une connexion de câble ;
la pluralité de composants auxiliaires d'appareillage de commutation comprenant une commande de sectionneur (11) et une commande de disjoncteur (10) ;
la pluralité de composants principaux d'appareillage de commutation étant logés dans l'au moins un premier compartiment ;
la pluralité de composants auxiliaires d'appareillages de commutation étant logés dans le second compartiment ; le disjoncteur et le sectionneur à mouvement linéaire ou rotatif à trois positions étant montés verticalement l'un au-dessus de l'autre dans l'au moins un premier compartiment ;
la commande de sectionneur (11) et la commande de disjoncteur (10) étant montées verticalement l'une au-dessus de l'autre dans le second compartiment ;
l'au moins un premier compartiment comprenant deux compartiments (8, 12), un premier compartiment (8) de l'au moins un premier compartiment étant un compartiment de connexion de câble à l'intérieur duquel est logée une connexion de câble ; et un second compartiment (12) de l'au moins un premier compartiment logeant le disjoncteur et le sectionneur à mouvement linéaire ou rotatif à trois positions ;
une porte (7) étant située dans une paroi séparant le compartiment de connexion de câble (8) du second compartiment (12) de l'au moins un premier compartiment ; le compartiment de connexion de câble (8) comportant une porte ou une section de paroi amovible dans une paroi extérieure ;
la porte (7) située dans la paroi séparant le compartiment de connexion de câble (8) du second compartiment (12) de l'au moins un premier compartiment étant configurée pour être ouverte lorsqu'un appareil d'alimentation est en fonctionnement et que la porte ou la section de paroi amovible dans la paroi extérieure du compartiment de connexion de câble est fermée, et la porte (7) située dans la paroi séparant le compartiment de connexion de câble (8) du second compartiment (12) de l'au moins un premier compartiment étant configurée pour se fermer automatiquement lorsque la porte ou la section de paroi amovible dans la paroi extérieure du compartiment de connexion de câble est ouverte pour permettre un accès humain, de telle sorte que la porte (7) située dans la paroi séparant le compartiment de raccordement de câble (8) du second compartiment (12) de l'au moins un premier compartiment forme une séparation à l'épreuve des arcs électriques conjointement avec la paroi de connexion de câble entre le compartiment de connexion de câble (8) et le second compartiment (12) de l'au moins un compartiment lorsqu'elle est dans la position fermée, permettant ainsi à un utilisateur de pouvoir entrer au moins en partie dans le compartiment de connexion de câble lorsque les composants du second compartiment (12) de l'au moins un premier compartiment sont sous tension.

2. Appareillage de commutation selon la revendication 1, dans lequel, lorsque la pluralité de composants principaux d'appareillage de commutation sont hors tension, l'au moins un premier compartiment est configuré pour permettre à un opérateur d'accéder à un intérieur de l'au moins un premier compartiment.

3. Appareillage de commutation selon l'une quelconque des revendications 1 et 2, dans lequel un capteur de tension (9) et un capteur de courant (6) sont logés dans le compartiment de connexion de câble.

4. Appareillage de commutation selon l'une quelconque des revendications 1 à 3, dans lequel au moins un capteur est situé dans le compartiment de connexion de câble (8), et dans lequel l'au moins un capteur est configuré pour surveiller les composants dans le compartiment de connexion de câble.

5. Appareillage de commutation selon l'une quelconque des revendications 1 à 4, dans lequel au moins un capteur est situé dans le second compartiment (12) de l'au moins un premier compartiment, et dans lequel l'au moins un capteur est configuré pour surveiller les composants dans le second compartiment de l'au moins un premier compartiment.

6. Appareillage de commutation selon l'une quelconque des revendications 1 à 5, dans lequel :
le second compartiment est ouvert latéralement sur au moins un côté.

7. Appareillage de commutation selon l'une quelconque des revendications 1 à 6, dans lequel :
le second compartiment de l'au moins un premier compartiment est dimensionné de telle sorte qu'un utilisateur puisse accéder à l'intérieur du second compartiment de l'au moins un premier compartiment sans pouvoir entrer complètement dans le second compartiment de l'au moins un premier compartiment.

8. Appareillage de commutation selon l'une quelconque des revendications 1 à **7,** dans lequel au moins un capteur est situé dans le second compartiment (1), et dans lequel l'au moins un capteur est configuré pour surveiller les composants dans le second compartiment.

9. Appareillage de commutation selon l'une quelconque des revendications 1 à 8, dans lequel un ou plusieurs composants parmi la pluralité de composants auxiliaires d'appareillage de commutation sont logés dans un module amovible à l'intérieur du second compartiment.
